# EUROPÄISCHE PATENTSCHRIFT

(11) **EP 2 665 760 B1**
(45) Veröffentlichungstag und Bekanntmachung des Hinweises auf die Patenterteilung: **12.10.2016**
(21) Anmeldenummer: 11802045.2
(22) Anmeldetag: 15.12.2011
(51) Int. Cl.: C08G 18/36

(54) **2K-PU-ZUSAMMENSETZUNG MIT VERZÖGERTER VERNETZUNG**
TWO-COMPONENT POLYURETHANE COMPOSITION WITH DELAYED CROSSLINKING
COMPOSITION DE POLYURÉTHANE À 2 COMPOSANTS À RÉTICULATION RETARDÉE

(30) Priorität: 18.01.2011 DE 102011002809
(43) Veröffentlichungstag der Anmeldung: 27.11.2013
(73) Patentinhaber: Henkel AG & Co. KGaA, 40589 Düsseldorf (DE)
(72) Erfinder: THIELE, Lothar, 40764 Langenfeld (DE); JÜTTNER, Werner, 40627 Düsseldorf (DE); OKAMOTO, Oliver-Kei, 40213 Düsseldorf (DE)
(86) Internationale Anmeldenummer: PCT/EP2011/072852
(87) Internationale Veröffentlichungsnummer: WO 2012/097928

(56) Entgegenhaltungen:
- DE-A1- 4 442 353
- DE-A1- 10 244 142

## Beschreibung

Die Erfindung betrifft eine vernetzbare 2-Komponenten-Zusammensetzung auf Basis von Polyurethanen, die als Klebstoff und als Matrix-Bindemittel zum Verkleben von Composit-Bauteilen aus Faserwerkstoffen und von Fasermaterialien geeignet ist. Die Erfindung betrifft weiter ein Verfahren zum Herstellen von Faserverbundteilen aus solchen 2K- Zusammensetzungen und Fasern.

In der WO2004/029121 werden 2K-PU-Klebstoffe beschrieben, die aus Polyolen auf Basis von Diolen und Triolen bestehen, die über Polyisocyanate vernetzen. Weiterhin sind in den Klebstoffen erhebliche Mengen von Pigmenten, wie hochdisperse Kieselsäure, Füllstoffen und Molekularsieb enthalten. Hochfunktionelle Polyole zur Erhöhung der Netzwerkdichte sind nicht beschrieben. Als Vernetzer werden aromatische Isocyanate eingesetzt. Ein Zusatz von die Umsetzung verlangsamenden Substanzen ist nicht beschrieben.

In der WO 2002/066572 werden 2K-PU-Klebstoffe für Holzwerkstoffe beschrieben, die bis zu 98 % oleochemische Polyole, 1 bis 7,5 % eines niedermolekularen Diols mit einer OH-Zahl zwischen 400 bis 2000, sowie 1 bis 7,5 % eines drei- bis fünffunktionellen Polyols enthalten, weitere Hilfsstoffe und ein Harz, wobei der Klebstoff über Polyisocyanate vernetzbar ist. Es werden Pigmente eingesetzt. Eine niedrige Viskosität dieser Klebstoffe ist nicht gegeben.

In der EP 0794977 werden 2K-PU-Klebstoffe beschrieben, die aus Polyolen, hochdisperser Kieselsäure, Füllstoffen und Molekularsieb bestehen, die über aromatische Polyisocyanate vernetzen. Als Polyole werden Diole und Triole eingesetzt. Es werden übliche Katalysatoren beschrieben. Eine gezielt langsame Vernetzung ist nicht beschrieben.

Es ist bekannt, glasfaserverstärkte Kunststoffsubstrate zu verkleben. Da solche Substrate eine hohe mechanische Stabilität zeigen, ist es notwendig, dass die entsprechenden Klebstoffe ebenfalls entsprechende Kräfte aufnehmen können. Beispiele für solche Verklebungen sind die Verklebung von faserverstärkten Bauteilen für Flügel oder andere Anbauteile von Flugzeugen, die Verklebung von faserverstärkten Bauteilen in der Bootsindustrie oder die Verklebung von faserverstärkten Bauteilen zur Herstellung von Flügeln für Windkraftanlagen.

Diese faserverstärkten Bauteile enthalten Fasern und ein Matrixbindemittel. Die mechanischen Anforderungen an diese Bauteile sind hoch. Es müssen hohe Zugkräfte aufgenommen werden, die Belastung durch permanente Schwingungen ist hoch und führt zu Materialermüdung. Weiterhin sind die Umwelteinflüsse groß, es muss eine Stabilität unter hohen Temperaturdifferenzen sichergestellt werden, sowie konstante Eigenschaften bei unterschiedlicher Feuchtigkeit. Dabei ist es bekannt, solche Bauteile mit 2K-Epoxid-Bindemitteln herzustellen. Diese zeigen eine ausreichende Festigkeit, haben aber verschiedene Nachteile in der Verarbeitung. Die Komponenten reagieren mit hoher Exothermie, also muss die Temperatur der Reaktionsmischung kontrolliert werden. Zusätzlich sind häufig hohe Nachvernetzungstemperaturen notwendig, um die endgültige ausreichende Festigkeit zu erhalten.

Die bekannten PU-Klebstoffe werden für Holz und Metallverklebungen beschrieben, eine Verklebung oder Einbettung von Fasermaterialien wird nicht beschrieben. Außerdem sind die Anforderungen an eine hohe mechanische Stabilität, die auch unter natürlichen Umweltbelastungen auftreten, nicht gegeben. Die Klebstoffe des Stands der Technik sind auf eine bei Raumtemperatur stabile und flexible Verklebung ausgerichtet. Deswegen ist die Glasübergangstemperatur meist niedrig, um eine geeignete Verklebung zu erzielen. Sie sollen weiterhin eine hohe Reaktivität aufweisen für eine schnelle Verklebung. Das führt aber dazu, dass die Topfzeit zum Verkleben großer Flächen und Werkstücke zu kurz ist. Diese Klebstoffe sind auch nicht geeignet, große Formen gleichmäßig mit den Klebstoffen zu füllen, weil durch eine schnelle Reaktion keine störungsfreien Matrixwerkstoffe erhalten werden.

Aufgabe der vorliegenden Erfindung ist es deswegen, eine 2K-Zusammensetzung auf Polyurethanbasis bereitzustellen, die als vernetzte Masse eine hohe mechanische Stabilität besitzt und eine gute Haftung zu einzubettenden Fasermaterialien oder zu Composit-Bauteilen zeigt. Weiterhin muss die Zusammensetzung eine niedrige Viskosität unter Verarbeitungsbedingungen aufweisen und eine lange Topfzeit, sodass das Befüllen in eine fasergefüllte Form möglich ist und sich keine vorzeitig vernetzten inhomogenen Bereiche bilden.

Die Erfindung wird gelöst durch eine vernetzende 2-Komponenten-Polyurethan-zusammensetzung bestehend aus
- einer Komponente A enthaltend Polyole, Additive,
- einer Komponente B enthaltend 100 bis 65 Gew.% aromatische Polyisocyanate, 0 bis 35 Gew.% aliphatische Polyisocyanate und 0,1 bis 3,0 Gew.% Verzögerer, sowie gegebenenfalls Additive,
wobei die gemischte Zusammensetzung eine Viskosität (EN ISO 2555) von 100 mPas bis 3000 mPas aufweist bei 25 °C, wobei die Viskosität unmittel-bar nach dem Mischen bestimmt wird, und die vernetzte Zusammensetzung eine Glasübergangstemperatur (Tg) über 50°C aufweist (gemessen mit DSC, DIN 11357) und eine Topfzeit über 60 min, wobei als Topfzeit die Zeit ver-standen werden soll, nach der die Viskosität einer Mischung bei 25°C auf mehr als 50000 mPas angestiegen ist.

Ein weiterer Gegenstand der Erfindung ist die Verwendung solcher 2K-PU-Zusammensetzungen zum Verbinden von faserverstärkten Formteilen. Ein weiterer Gegenstand sind Mischungen aus Fasermaterialien und den 2K-PU-Zusammensetzungen.

Als Bestandteile von Composit-Werkstoffen sind bekannte hochfeste Faserwerkstoffe geeignet. Diese können beispielsweise aus Glasfasern; synthetischen Fasern, wie Polyesterfasern, Polyethylenfasern, Polypropylenfasern, Polyamidfasern, Polyimidfasern oder Aramidfasern; Kohlenstofffasern; Borfasern; oxidischen oder nicht oxidischen Keramikfasern, wie Aluminiumoxid/Siliciumdioxidfasern, Siliciumcarbidfasern; Metallfasern, beispielsweise aus Stahl oder Aluminium; oder aus Naturfasern, wie Flachs, Hanf oder Jute bestehen. Diese Fasern können in Form von Matten, Geweben, Gewirken, Gelegen, Vliesen oder Rovings eingebracht werden. Es können auch zwei oder mehr dieser Fasermaterialien als Gemisch verwendet werden. Es können Kurzschnittfasern, bevorzugt Langfasern, insbesondere Gewebe und Gelege, ausgewählt werden. Solche hochfesten Fasern, Gelege und Gewebe sind dem Fachmann bekannt. Sie werden beispielsweise im Flugzeugbau, Bootsbau Fahrzeugbau oder bei anderen mechanisch hoch belasteten Bauteilen eingesetzt.

Als Polyisocyanate in der Isocyanatkomponente sind mehrfach funktionelle Isocyanate geeignet. Vorzugsweise enthalten die Isocyanate im Mittel 2 bis 5, vorzugsweise bis 4 NCO-Gruppen. Beispielsweise für geeignete Isocyanate sind aromatische Isocyanate, wie1,5-Naphthylendiisocyanat, 2,4- oder 4,4'-Diphenylmethandiisocyanat (MDI), carbodiimidmodifiziertes MDI, Xylylendiisocyanat (XDI), m- und p-Tetramethylxylylendiisocyanat (TMXDI), die Isomere des Toluylendiisocyanats (TDI), 4,4'-Diphenyldimethylmethandiisocyanat, Di- und Tetraalkyldiphenyl-methandiisocyanat, 1,3-Phenylendiisocyanat, 1,4-Phenylendiisocyanat, 4,4'-Dibenzyldiisocyanat; aliphatische Isocyanate, wie hydriertes MDI (H12MDI), 1-Methyl-2,4-diisocyanato-cyclohexan, 1,12-Diisocyanatododecan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan (IPDI), Tetramethoxybutan-1,4-diisocyanat, Butan-1,4-diisocyanat, Hexan-1,6-diisocyanat (HDI), Dimerfettsäure-diisocyanat, Dicyclohexylmethandiisocyanat, Cyclohexan-1,4-diisocyanat, Ethylendiisocyanat oder Phthalsäure-bisisocyanatoethylester.

Es können auch niedermolekulare Prepolymere eingesetzt werden, also Oligomere mit mehreren Isocyanatgruppen, beispielsweise Umsetzungsprodukte von MDI bzw. TDI mit niedermolekularen Diolen, wie z.B. Ethylenglykol, Diethyenglykol, Propylenglykol, Dipropylenglykol oder Triethylenglykol. Diese Oligomere werden mit einem Überschuss von monomerem Polyisocyanat in Gegenwart von Diolen erhalten. Dabei liegt das Molekulargewicht der Diole im Allgemeinen unterhalb von 1000 g/mol. Ggf. kann das Umsetzungsprodukt durch Destillation von Monomeren befreit werden. Ebenso sind Carbodiimid enthaltene verflüssigte Diphenylmethandiisocyanate oder Roh-MDI geeignet. Als aliphatische Isocyanate sind Isocyanurate, Carbodiimide und Biurete von Isocyanaten, insbesondere von HDI oder IPDI, geeignet. Vorzugsweise soll die Mischung der Polyisocyanate bei Raumtemperatur fließfähig sein.

In einer Ausführungsform der Erfindung ist es notwendig, dass Gemische aus aliphatischen und aromatischen Polyisocyanaten eingesetzt werden. Sind zu großen Mengen aliphatischer Isocyanate enthalten, ist die mechanische Stabilität des vernetzten Polymers zu niedrig. Ist der Anteil der aromatischen Isocyanate zu hoch, können solche Mischungen zu schnell vernetzen, eine homogene Befüllung der Formen ist nicht möglich. Dabei soll die Menge von 99,9 bis 65 Gew-% aromatischer Polyisocyanate und von 0,1 bis 35 % aliphatischer Polyisocyanate betragen, wobei die Summe der Isocyanate 100% betragen soll. Eine andere Ausführungsform setzt ausschließlich aromatische Isocyanate ein, bevorzugt sind dabei mindestens 35 Gew-% Isocyanate mit unterschiedlich reaktiven Gruppen enthalten. Beispiele dafür sind 2,4-MDI, 4,4'-MDI oder entsprechende Gemische.

Die erfindungsgemäße 2K-PU-Zusammensetzung hat eine niedrige Viskosität. Auch die Polyolkomponente muss eine niedrige Viskosität aufweisen. Die Polyolkomponente soll mehrfunktionelle Polyole enthalten. Es ist vorteilhaft, wenn die Polyolkomponente auch hydrophobe Polyole enthält. Geeignete Polyole sind beispielsweise flüssige Polyhydroxyverbindungen mit im Durchschnitt zwei bis zehn Hydroxylgruppen pro Molekül.

Beispiele für solche hydrophoben Polyole sind OH-funktionelle Polybutadiene, wie sie z.B. unter dem Handelsnamen "Poly-bd" erhältlich sind, können für die erfindungsgemäßen Zusammensetzungen als hydrophobe Polyole eingesetzt werden.

Es können aber auch hydrophobe Polyole oleochemischer Herkunft verwendet werden. Unter oleochemischen Polyolen versteht man Polyole auf Basis natürlicher Öle und Fette, z.B. die Reaktionsprodukte von epoxidierten Fettstoffen mit mono-, di- oder polyfunktionellen Alkoholen oder Glycerinester langkettiger Fettsäuren, die zumindest teilweise mit Hydroxylgruppen substituiert sind. Derartige Polyesterpolyole können beispielsweise durch vollständige Ringöffnung von epoxidierten Triglyceriden hergestellt werden, bei denen die Ringöffnung unter Erhalt der Esterbindungen ausgeführt worden ist. Als Alkohole für die Ringöffnung der epoxidierten Triglyceride können Methanol, Ethanol, Propanol, Isopropanol, Butanol, Hexanol, 2-Ethylhexanol, Fettalkohole mit 6 bis 22 C-Atomen, Cyclohexanol, Benzylalkohol, 1,2-Ethanol, 1,2-Propandiol, 1,3-Propandiol, 1,4-Butandiol. 1,6-Hexandiol, Neopentylglykol, Trimethylolpropan, Glycerin, Trimethylolethan, Pentaerythrit, Sorbit sowie ethergruppenhaltige Hydroxyverbindungen wie Alkylglykole oder oligomere Glykole sowie oligomere Glycerine eingesetzt werden.

Eine weitere Gruppe der oleochemischen Polyole sind Ringöffnungs- und Umesterungsprodukte von epoxidierten Fettsäureestern niederer Alkohole, also von epoxidierten Fettsäuremethyl-, -ethyl-, -propyl- oder-butylestern. Bevorzugt sind hier die Ringöffnungs- oder Umesterungsprodukte mit Alkoholen der Funktionalität 2 bis 4, insbesondere die Umsetzungsprodukte mit Ethylenglykol, Propylenglykol, oligomeren Ethylenglykolen, oligomeren Propylenglykolen, Glycerin, Trimethylolpropan oder Pentaerythrit. Durch Hydrieren der Estergruppe kann die Funktionalität vergrößert werden.

Eine weitere Gruppe erfindungsgemäß notwendiger Polyole sind höher funktionalisierte Polyole mit 3 bis 14 OH-Gruppen, insbesondere 4 bis 9 OH-Gruppen. Diese Polyole erhöhen die Vernetzungsdichte der Polymere und ergeben eine verbesserte Festigkeit. Es kann sich dabei um Gemische von Polyolen handeln. Es sind diese Polyole unterschiedlich zu den oben genannten hydrophoben Polyolen.

Beispiele für solche Polyole sind Zuckeralkohole, die eine entsprechende Anzahl von OH-Gruppen aufweisen, insbesondere Tetrite, Pentite oder Hexite oder solche auf Basis von Disacchariden. Es können auch die entsprechenden Zucker eingesetzt werden, insbesondere handelt es sich jedoch um die hydrierten Zuckeralkohole. Beispiele sind Sorbitol, Inositol, Mannitol, Threitol, Erythritol, Adonitol, Arabitol, Ribitol, Xylitol, Dulcitol, Ribose, Xylose, Lyxose, Glucose, Galactose, Mannose, Allose, Altrose, Gulose, Idose, Talose, Fructose, Sorbose, Psicose, Tegatose, Desoxyribose, Glucosamin, Galaktosamin, Rhamnose, Digitoxose, Saccharose, Lactose, Trehalose, Maltose, Cellobiose, Melibiose, Gestiobiose, Rutinose. Es können auch die entsprechenden Ethoxylierungs- und Propoxylierungsprodukte mit bis zu 15 Alkylenoxideinheiten eingesetzt werden.

Gegebenenfalls können auch Polyole mit 4, 5 oder 6 OH-Gruppen eingesetzt werden, die mindestens eine tertiäre Aminogruppe aufweisen. Beispiele dafür sind propoxylierte oder ethoxylierte Umsetzungsprodukte von C₃ bis C₆-Diaminen oder Triaminen. Insbesondere sind Ethoxylierungs- und Propoxylierungs-Produkte von Ethylendiamin geeignet.

Das Molekulargewicht geeigneter höher funktionalisierter Polyole kann 120 bis 3000 g/mol betragen, insbesondere 250 bis zu 2000 g/mol.

Es können auch Polyetherpolyole eingesetzt werden. Beispiele dafür sind Umsetzungsprodukte aus 3 bis 6 funktionellen Alkoholen, die durch Umsetzung mit Ethylenoxid oder Propylenoxid hergestellt werden können, beispielsweise Polypropylenglykole. Eine weitere Gruppe von geeigneten Polyetherpolyolen sind die Polytetramethylenglykole, die z.B. durch die saure Polymerisation von Tetrahydrofuran hergestellt werden können. Dabei liegt das Molekulargewicht dieser Polyetherpolyole im Allgemeinen zwischen 200 und 6000 g/mol, vorzugsweise im Bereich von 300 bis 3000 g/mol.

Diese höherfunktionalisierten Polyole können Äquivalentgewichte von 30 bis 400 g/val, bevorzugt 50 bis 300 g/val aufweisen, das Molekulargewicht liegt dabei ungefähr über 500 und unter 1500 g/mol. Die mittlere Funktionalität der Polyole in Komponente A soll im Durchschnitt 2,2 bis 5 betragen, insbesondere über 2,5 bis 4. Es können auch Gemische eingesetzt werden, wobei einzelne Bestandteile eine unterschiedliche Anzahl von OH-Gruppen enthalten können. Die verschiedenen Polyole sind kommerziell erhältlich.

Die höherfunktionellen Polyole tragen üblicherweise OH-Gruppen. Es ist in einer anderen Ausführungsform jedoch auch möglich, dass zumindest anteilsweise auch -SH oder -NHR-Gruppen als reaktive funktionelle Gruppen vorhanden sind. In einer bevorzugten Ausführungsform sind jedoch Verbindungen, die primäre, sekundäre oder tertiäre Aminogruppen aufweisen, nicht in einer erfindungsgemäß geeigneten Zusammensetzung enthalten.

Weiterhin können gegebenenfalls auch Anteile bis zu 10 Gew-% Diole enthalten sein. Es kann sich dabei um Polyesterdiole handeln. Als Polyesterdiole sind solche mit einem Molekulargewicht von etwa 500 bis etwa 1500 g/mol geeignet. So können beispielsweise Polyesterpolyole verwendet werden, die durch Umsetzung von niedermolekularen Alkoholen mit Lactonen entstehen oder durch Umsetzung von Dicarbonsäuren mit Diolen. Solche Polyesterpolyole sind dem Fachmann bekannt. Es können aber auch C2 bis C 10 Diole oder Copolymerisate aus Ethylen- und/oder Propylenoxid mit einem Molekulargewicht unter 1000 g/mol enthalten sein.

Die erfindungsgemäßen 2K-PU-Zusammensetzungen können weiterhin Hilfsstoffe enthalten, die vorzugsweise ganz oder teilweise der Polyolkomponente zugemischt werden. Darunter werden Stoffe verstanden, die in der Regel in kleinen Mengen zugesetzt werden, um die Eigenschaften des Klebstoffs in gewünschter Richtung zu verändern, z.B. Viskosität, Benetzungsverhalten, Stabilität, Reaktionsgeschwindigkeit, Blasenbildung, Lagerfähigkeit oder Haftung, und auch Gebrauchseigenschaften dem Anwendungszweck anzupassen. Beispiele für Hilfsstoffe sind Verlaufmittel, Reaktionsverzögerer, Thixotropiermittel, Katalysatoren, Alterungsschutzmittel, Farbstoffe, Trockenmittel, Harze und/oder Netzmittel.

Es können auch Katalysatoren eingesetzt werden. Als Katalysatoren werden die üblichen, in der Polyurethan-Chemie bekannten, metallorganischen Verbindungen eingesetzt, wie z.B. Eisen- oder auch insbesondere Zinn-Verbindungen. Insbesondere können tertiären Amine oder Amidine als Katalysatoren eingesetzt werden, ggf. in Kombination mit den oben genannten Zinnverbindungen. Eine bevorzugte Ausführungsform der erfindungsgemäßen 2K-PU-Zusammensetzung ist jedoch frei von solchen katalysierenden Substanzen.

Weiterhin kann die erfindungsgemäße Zusammensetzung ggf. zusätzlich Stabilisatoren enthalten. Als Stabilisatoren im Sinne dieser Erfindung sind Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer).

Es ist auch möglich, dass geringe Mengen von Weichmacher, Farbpasten, Molekularsiebe, Pigmenten oder Füllstoffen enthalten sind. Die Menge solcher Bestandteile soll aber unter 15 Gew.-% betragen. Bevorzugt soll die Menge der Füllstoffe und Pigmente unter 2 Gew.-% betragen. Insbesondere sind keine Pigmente, Molekularsiebe, Füllstoffe und/oder Weichmacher enthalten. Die erfindungsgemäße Zusammensetzung soll bevorzugt keine organischen Lösemittel enthalten. Als Trockenmittel können auch flüssige Verbindungen eingesetzt werden, die während der Lagerung Feuchtigkeit abfangen.

Weiterhin können gegebenenfalls Harze enthalten sein. Dabei kann es sich um natürliche Harze handeln oder um synthetische Harze. Eine besondere Ausführungsform setzt OH-Gruppen-haltige Harze ein, insbesondere mit mehreren OH-Gruppen. Diese können dann auch mit den Isocyanaten reagieren können. In einer bevorzugten Ausführungsform kann die Menge zwischen 5 bis 30 Gew.-% betragen.

Die Additive werden so ausgewählt, dass sie keine Reaktionen oder Nebenreaktionen mit den Isocyanaten eingehen, zumindest nicht in der Zeitdauer der Vernetzungsreaktion.

Als Verzögerer im Sinn dieser Erfindung werden Substanzen verstanden, die die Reaktion zwischen OH- und NCO-Gruppen verlangsamen. Dazu sind sauer wirkende Verbindungen geeignet, beispielsweise organische oder anorganische Carbonsäuren, Säurechloride, saure anorganische Salze oder andere saure organische Verbindungen. Diese sollen in Mengen von 0,05 bis 3,0 Gew-% enthalten sein.

Erfindungsgemäß als Verzögerer zu verwendende organische Säuren sind solche, die beispielsweise einen pKs-Bereich zwischen 2,8 und 4,5 aufweisen, wie Phthalsäure, Isophthalsäure, Terephtalsäure, Ascorbinsäure, Benzoesäure, o-Hydroxy-benzoesäure, p-Hydroxybenzoesäure, 2,3-Dihydroxybenzoesäure, 2,4-Dihydroxybenzoesäure, 3,4- Dihydroxybenzoesäure, Salicylsäure, Adipinsäure, Bersteinsäure, Äpfelsäure, Acetylsalicylsäure, Alanin, ß-Alanin, 4-Amino-buttersäure, Glycin, Milchsäure, Sarkosin, Serin. Es können aber auch Ameisensäure, Essigsäure, Monochlor- oder Dichloressigsäure, 2,4- oder 2,6-Dichlorphenylessigsäure; Phosphorsäure, Hydrogenphosphate; polymere Kationentauscher mit Carboxygruppen oder mit Orthophosphatgruppen; Lithiumchlorid, 4-Toluylensulfonylisocyanat oder Säurechloride der oben erwähnten Carbonsäuren eingesetzt werden. Es können dabei die vorgenannten Verbindungen sowohl einzeln als auch Mischungen verwendet werden.

Eine Zusammensetzung gemäß der Erfindung kann als Komponente A 5 bis 40 Gew.-% hydrophobe Polyole enthalten, insbesondere oleochemische Polyole, 50 bis 90 Gew.-% tri- und mehr-funktionelle Polyole mit einem Äquivalentgewicht von 30 bis 400 g/val, 0 bis 10 Gew.-% Diole mit Äquivalentgewicht von 30 bis 500 g/val, sowie 0,05 bis 10 Gew.-% Additive. Eine bevorzugte Ausführungsform soll dabei insbesondere bis zu 5 % flüssige Trockenmittel enthalten. Eine weitere bevorzugte Ausführungsform soll Anteile Rizinusöl und/oder Polypropylenglykol enthalten. Dabei soll die Summe der Prozentzahlen der Polyolkomponente jeweils 100 % ergeben.

In der Isocyanatkomponente B sollen 65 bis 100 Gew.-% aromatische Polyisocyanate enthalten sein sowie 0 bis 35 Gew.-% aliphatische Isocyanate und 0 bis 3 Gew.-% mindestens eines Verzögerers. Insbesondere sind ausschließlich aromatische Isocyanate, beispielsweise mit unterschiedlich reaktiven NCO-Gruppen enthalten. Das Verhältnis der in der Isocyanatkomponente enthaltenen Isocyanatgruppen zu den in der Polyolkomponenten enthaltenen OH-Gruppen liegt in der Regel im Bereich der Äquivalenz, wobei im Hinblick auf an der Oberfläche vorhandene Feuchtigkeit ein geringer Überschuß an Isocyanat-Gruppen zweckmäßig ist. Das NCO/OH-Verhältnis soll zwischen 0,90:1 und 1,5:1 betragen, insbesondere 1,0:1 bis 1,2:1.

Zur Herstellung des erfindungsgemäßen 2K-Polyurethan-Zusammensetzung wird zunächst die Polyolkomponente hergestellt. Dazu können die flüssigen Polyole gemischt werden, anschließend sind gegebenenfalls feste Anteile in der Mischung zu lösen. Das kann auch durch Erwärmen unterstützt werden. Anschließend werden die Hilfsstoffe zugemischt und dispergiert. Dabei soll der Feuchtigkeitsgehalt niedrig gehalten werden, beispielsweise kann Wasser durch die Verwendung von Trocknungsmittel wie Zeolithe vermindert werden oder durch Trocknung im Vakuum. Inerte Hilfsstoffe können auch teilweise der Isocyanat-Komponente zugemischt werden. Die zwei Komponenten werden bis zu ihrer Anwendung getrennt gelagert. Zur Anwendung werden diese beiden Komponenten in an sich bekannter Weise miteinander gemischt und das Gemisch auf die zu verklebenden Substrate aufgetragen

Um eine erfindungsgemäße Anwendung zu ermöglichen, weist eine erfindungsgemäße 2K-PU-Zusammensetzung eine Viskosität in gemischter Form von 100 bis 3000 mPas auf (gemessen mit Brookfield RTV, DIN ISO 2555), gemessen bei einer Temperatur zwischen 20 und 60°C. Insbesondere soll die Viskosität von 100 bis 1500 mPas betragen, bevorzugt unter 1000 mPas gemessen bei 20 bis 40°C. Dabei kann die erfindungsgemäße 2K-PU-Zusammensetzung bei diesen Temperaturen appliziert werden. Die Viskosität soll unmittelbar nach dem Mischen bestimmt werden, beispielsweise bis zu 2 min. nach dem Mischen, durch die einsetzende Vernetzungsreaktion nimmt sie langsam zu.

Die erfindungsgemäße 2K-PU-Zusammensetzung hat eine lange Topfzeit. Diese soll über 60 min. betragen, insbesondere über 90 min. liegen. Als Topfzeit soll die Zeit verstanden werden, nach der die Viskosität einer Mischung bei 25°C auf mehr als 50000 mPas angestiegen ist. Die Topfzeit kann durch die Auswahl der Polyole, die Reaktivität der Isocyanate und Menge und Auswahl der verzögernden Substanzen beeinflusst werden.

Die erfindungsgemäße vernetzte Zusammensetzung weist eine Glasübergangstemperatur (T_{g}) von 50°C bis 130°C auf (gemessen mit DSC, DIN 11357), insbesondere von 60 bis 110°C auf. Durch die erfindungsgemäße Auswahl der polyfunktionellen Polyol wird eine hohe mechanische Stabilität der Zusammensetzung erhalten.

Weiterhin Gegenstand der Erfindung ist ein Verfahren zum Herstellen von Verbundbauteilen. Dabei werden die erfindungsgemäßen Zusammensetzungen durch Eintragen in eine Form appliziert. Diese soll die oben erwähnten Fasermaterialien enthalten, beispielsweise in einer gerichteten Form. Erfindungsgemäß werden zuerst batch-weise oder kontinuierlich die beiden Komponenten A und B gemischt. Unmittelbar danach wird die flüssige Mischung in eine geschlossene Form eingebracht. In der Form sind die Fasermaterialien bereits enthalten und in der gewünschten Lage angeordnet. Die erfindungsgemäßen Zusammensetzungen können durch Vakuum oder Druck in die Form eingebracht werden. Dabei ist darauf zu achten, dass die Fließgeschwindigkeit so gewählt wird, dass Luft oder Gase zwischen den Fasermaterialien entweichen können. Bei einer anderen Arbeitsweise wird die Form, die das Fasermaterial enthält, mit einer Folie abgedeckt und am Rand vakuumdicht verschlossen. Die Form hat Öffnungen, durch die ein Unterdruck an die Form angelegt werden kann. Durch den Unterdruck wird die erfindungsgemäße Mischung gleichmäßig in die Form gesaugt. Bei dieser Arbeitsweise ist es vorteilhaft, dass durch den Unterdruck mögliche Einschlüsse von Blasen vermindert werden können. Solche Infusionsverfahren sind dem Fachmann im Prinzip bekannt.

Durch die Größe der Formen, die auch mehr als 30 m lang sein können, ist eine Befüllung nur langsam möglich. Die erfindungsgemäßen Zusammensetzungen haben eine Topfzeit, die ein langsames Anfließen an die Fasermaterialien, ein Verdrängen der Luftblasen und ein Füllen der Form über einen längeren Zeitraum gestatten. Dabei werden die Fasermaterialien vollständig in dem Matrixmaterial eingebettet.

Nach dem Füllen der Form beginnt die Zusammensetzung zu härten. Das kann ohne zusätzliche Wärmezufuhr geschehen. Die durch die Vernetzungsreaktion entstehende Reaktionswärme führt nicht zu einer örtlichen Überhitzung der Substrate. Um die Vernetzungsreaktion zu beschleunigen ist es möglich, nach dem vollständigen Befüllen der Form mit der Zusammensetzung diese zu erwärmen. Die Erwärmung kann auf Temperaturen bis zu 90°C durchgeführt werden. Dabei wird eine schnellere Vernetzung des Matrixmaterials erreicht. Damit kann die Form früher von dem Formteil entfernt werden und steht dann für weitere Arbeitsschritte zur Verfügung. Die Aushärtung kann auch im Vakuum oder unter Druck erfolgen.

Die erfindungsgemäß geeigneten Zusammensetzungen ergeben nach Vernetzung als Composit-Teil eine hohe mechanische Stabilität. Die Strukturstabilität des Verbundwerkstoffs kann beispielsweise über den E-Modul gemessen werden. Durch die erfindungsgemäße Zusammensetzung wird sichergestellt, dass dieser bei Temperaturen zwischen -10°C und + 70°C der E- Modul größer 1000 MPa beträgt (analog DIN EN ISO 527).

Es kann für eine Verbesserung der Eigenschaften der vernetzten Matrix auch vorteilhaft sein, nach der Aushärtung der Zusammensetzung die Formteile einem Temperprozess zu unterwerfen. Dabei soll das Formteil für einen Zeitraum zwischen 30 min und 24 Stunden gleichmäßig auf eine erhöhte Temperatur zwischen 40 bis 90°C gebracht werden. Unabhängig von einer Theorie wird angenommen, dass dabei eine innere Ordnung der Vernetzungsstellen und teilkristallinen Bereiche erhalten wird, die so zu stabilen Eigenschaften der Matrix führen. Damit soll bei erfolgter Vernetzung die mechanische Stabilität der ausgehärteten Polymermatrix bei thermischer Belastung verbessert werden.

Die erfindungsgemäßen 2K-PU-Zusammensetzungen sind insbesondere zum Einbetten von Fasermaterialien geeignet, beispielsweise für das Infusionsverfahren. Dabei werden die bekannten Fasermaterialien angeordnet und insgesamt in eine Polymermatrix eingebettet. Es werden Composit-Formteile erhalten, die eine hohe mechanische Stabilität und eine gute Witterungsstabilität aufweisen.

Die Zusammensetzung zeigt eine gute Haftung auf den Fasersubstraten. Durch die verminderte Viskosität kann eine fehlerfreie Matrix erzeugt werden, insbesondere Blasen werden in dem Formteil vermieden. Ein weiterer Vorteil liegt darin, dass durch die verzögerte Reaktivität die Temperatur einer erfindungsgemäßen Zusammensetzung nur langsam ansteigt. Eine Überhitzung der Composit-Teile wird vermieden, damit wird auch eine Schädigung von empfindlichen Fasermaterialien verhindert.

Ein weiterer Vorteil der Zusammensetzung ist die erhöhte Witterungsstabilität der Faserverbundwerkstoffe. Auch bei erhöhter Temperatur und bei erhöhter Luftfeuchtigkeit tritt keine wesentliche mechanische Schwächung der Bauteile ein. Die entsprechenden Faserformteile sind also insbesondere zur Verwendung unter stark wechselnden Witterungsbedingungen geeignet.

Die folgenden Beispiele erläutern die Erfindung.

Messmethoden:
Viskosität: Brookfield RVT (ISO EN 2555) bei angegebener Temperatur Glasübergangstempreatur (Tg): DSC
Topfzeit: Es werden die beiden Komponenten auf 25 °C gebracht und im vorgegebenen Mengenverhältnis gemischt. Es wird in regelmäßigen Zeitabständen die Viskosität bestimmt. Als Topfzeit wird die Zeit ermittelt bei der die Viskosität über 50000 mPas gestiegen ist.

Zugfestigkeit, Bruchdehnung, E-Modul: DIN EN ISO 527 (Prüfgeschwindigkeit 1 mm/min)

Schubfestigkeit, Schubverformung, Schubmodul: DIN EN ISO 14129 (Prüfgeschwindigkeit 2mm/min)
Fasergehalt: DIN EN ISO 1172

Die Bestandteile der Polyolkomponente werden gemischt und im Vakuum getrocknet. Analog werden die Bestandteile der NCO-Komponente gemischt.

Zur Anwendung werden die Komponenten A und B bei Raumtemperatur im Verhältnis 1.1 gemischt und anschließend in senkrechte Plattenformen gefüllt. Die Härtung erfolgt 1 h bei 30°C, dann 4 h bei 80°C. Anschließend werden die Platten zu Prüfkörpern zersägt.

| | 1 erfindungsgemäß | 2 erfindungsgemäß | 3 erfindungsgemäß | 3 nicht erfindungsgemäß |
|---|---|---|---|---|
| Polyolkomponente | | | | |
| Rizinusöl | 15,0 | 10,0 | 10,0 | 10,0 |
| 1,4- Butandiol | 2,5 | 2,5 | 2,5 | 0,0 |
| PPG 400 | 0 | 0 | 0 | 12,0 |
| PPG-Triol Molmasse 250 | 45,0 | 52,0 | 52,0 | 52,0 |
| PPG-Triol Molmasse 750 | 35,5 | 35,5 | 33,5 | 24,0 |
| Oxazolidin - Trockenmittel | 2,0 | 0 | 2,0 | 2,0 |
| Isocyanatkomponente | | | | |
| MDI | 78,0 | 72,0 | 99,8 | 50,0 |
| HDI-Trimer | 21,7 | 27,8 | 0 | 49,8 |
| Isophthalsäuredichlorid | 0,3 | 0,2 | 0,2 | 0,2 |

| | 1 | 2 | 3 | 4 | |
|---|---|---|---|---|---|
| Viskosität (2 min) | 310 | 340 | 240 | 540 | mPas |
| Viskosität (1 h): | 48500 | 48000 | 49000 | 42250 | mPas |
| E-Modul: | 2320 | 2350 | 3060 | 1465 | MPa |
| Zugfestigkeit: | 65,0 | 62,5 | 68,9 | 52,3 | MPa |
| Bruchdehnung: | 5,0 | 5,2 | 6,1 | 4,1 | % |
| Tg: | 66 °C | 64 °C | 71 °C | 46 °C | |

Vergleichsbeispiel 5 wurde analog Beispiel 2 durchgeführt mit der Maßgabe, dass kein Isophthalsäuredichlorid zugesetzt wurde. Die Viskosität Ausgangsviskosität war gleich, nach 60 min betrug die Viskosität 54000 mPas.

Composit-Herstellung mit Formulierung entsprechend Beispiel 2:
Auf einer Polypropylenplatte werden auf 2 Lagen Biaxal-Glasfasergelege, Abreißgewebe aus Polypropylen und eine Fliesshilfe gelegt. Dieser Aufbau wird mit einer Vakuumfolie abgedeckt, die mit Dichtschnur auf der Polypropylenplatte so fixiert wird, dass sich zwischen Platte und Folie ein Vakuum erzeugen lässt (Vakuumsack). Die Materialzuführung erfolgt mit PVC-Schlauch aus einem Vorratsbehälter, der die gemischte 2K-PU-Zusammensetzung enthält. Im Vakuumsack erfolgt die Verteilung des Harzes über einen Schlitzschlauch. Es wird mit einem Vakuum von 100 mbar gearbeitet, das über einen Schlitzschlauch gleichmäßig über die gesamte Breite des Geleges angelegt wird. Nach 12 h Aushärtung bei Raumtemperatur wird das Composite 4 h bei 80°C getempert.

**Schubzugeigenschaften :**

| Schubfestigkeit | Schubverformung | Schubmodul | Fasermassegehalt | Faservolumengehalt |
|---|---|---|---|---|
| 65 MPa | 0,07 % | 3,9 GPa | 63 % | 44 % |
| Wertebestimmung in +/- 45°-Richtung | | | | |

## Patentansprüche

1. Vernetzende 2-Komponenten-Polyurethanzusammensetzung bestehend aus
- einer Komponente A enthaltend Polyole, Additive,
- einer Komponente B enthaltend 100 bis 65 Gew.% aromatische Polyisocyanate, 0 bis 35 Gew.% aliphatische Polyisocyanate und 0,1 bis 3,0 Gew.% Verzögerer, sowie gegebenenfalls Additive,
wobei die gemischte Zusammensetzung eine Viskosität (EN ISO 2555) von 100 mPas bis 3000 mPas aufweist bei 25 °C, wobei die Viskosität unmittelbar nach dem Mischen bestimmt wird, und die vernetzte Zusammensetzung eine Glasübergangstemperatur (Tg) über 50°C aufweist (gemessen mit DSC, DIN 11357) und eine Topfzeit über 60 min, wobei als Topfzeit die Zeit verstanden werden soll, nach der die Viskosität einer Mischung bei 25°C auf mehr als 50000 mPas angestiegen ist.

2. 2K-PU-Zusammensetzung nach Anspruch 1, **dadurch gekennzeichnet, dass** die Polyolkomponente enthält 0 bis 10 Gew.% Diole mit einem Äquivalentgewicht von 30 bis 500 g/val, 50 bis 90 Gew.% Polyole mit einem Äquivalentgewicht von 30 bis 400 g/val, 5 bis 40 Gew.% oleochemische Polyole und 0 bis 2 Gew.% Katalysatoren.

3. 2K-PU-Zusammensetzung nach Anspruch 1 oder 2, **dadurch gekennzeichnet, dass** und der Verzögerer ausgewählt aus organischen Carbonsäure, anorganischen Säuren, Säurechloriden, sauren Salzen oder sauren Isocyanaten.

4. 2K-PU-Zusammensetzung nach Anspruch 1 bis 3, **dadurch gekennzeichnet, dass** unter 2 Gew.-% Pigmente und Füllstoffe enthalten sind.

5. 2K-PU-Zusammensetzung nach Anspruch 1 bis 4, **dadurch gekennzeichnet, dass** die aromatischen Isocyanate ausgewählt werden aus 2,4-MDI und/oder 4,4- MDI, insbesondere Gemische, und die aliphatischen Isocyanate ausgewählt werden aus den Oligomeren des HDI.

6. 2K-PU-Zusammensetzung nach einem der Ansprüche 1 bis 4, **dadurch gekennzeichnet, dass** die Zusammensetzung frei von Weichmachern, Lösemitteln und/oder Pigmenten ist.

7. 2K-PU-Zusammensetzung nach einem der Ansprüche 1 bis 5, **dadurch gekennzeichnet, dass** die 2K-PU-Zusammensetzung 60 min. nach der Mischung eine Viskosität unter 50000 mPas besitzt.

8. 2K-PU-Zusammensetzung nach Anspruch 1 bis 7, **dadurch gekennzeichnet, dass** die vernetzte Zusammensetzung eine Glasübergangstemperatur von 50 bis 130 °C aufweist.

9. Verfahren zum Herstellen von Verbundbauteilen aus synthetischen Fasern und 2K-PU-Zusammensetzungen, **dadurch gekennzeichnet, dass** die Komponenten der Zusammensetzung nach Anspruch 1 bis 8 gemischt werden und unmittelbar danach unter Vakuum und/oder Druck in eine Fasern enthaltende Form eingebracht wird.

10. Verfahren nach Anspruch 9, **dadurch gekennzeichnet, dass** die Mischung der Komponenten vordem Einbringen in die Form von eingeschlossenen Gasen befreit wird.

11. Verfahren nach Anspruch 9 oder 10, **dadurch gekennzeichnet, dass** die Zusammensetzung bei 15 bis 35°C eingetragen wird und die Umsetzung nach dem vollständigen Füllen der Form durch erhöhte Temperatur beschleunigt wird.

12. Verfahren nach Anspruch 9 bis 11, **dadurch gekennzeichnet, dass** das Fasermaterial ausgewählt wird aus Naturfasern, Glasfasern, Kohlefasern, synthetischen Fasern, Keramikfasern, Borfasern, Metallfasern oder anderen hochfesten Fasermaterialien.

13. Verfahren nach Anspruch 12, **dadurch gekennzeichnet, dass** die Fasermaterialien als Matten, Gewebe, Gewirke, Rovings, Gelege ggf. nach einer Vorbehandlung der Fasern, eingesetzt werden.

14. Faserverbundwerkstoff bestehend aus Fasermaterialien und einer 2K-PU Zusammensetzung nach einem der Ansprüche 1 bis 8.

15. Faserverbundwerkstoff nach Anspruch 14, wobei die Fasermaterialien gerichtet enthalten sind und in eine Matrix aus der 2K-PU Zusammensetzung eingebettet sind.

## Claims

1. A cross-linking two-component polyurethane composition consisting of
- a component A containing polyols, additives,
- a component B containing 100 to 65 wt.% aromatic polyisocyanates, 0 to 35 wt.% aliphatic polyisocyanates and 0.1 to 3.0 wt.% retarders, and optionally additives,
wherein the mixed composition has a viscosity (EN ISO 2555) of 100 mPas to 3000 mPas at 25°C, wherein the viscosity is determined immediately after mixing, and the cross-linked composition has a glass transition temperature (Tg) of more than 50°C (measured by DSC, DIN 11357) and a pot life of more than 60 minutes, wherein the pot life is understood to mean the time after which the viscosity of a mixture at 25°C has increased to more than 50000 mPas.

2. The two-component polyurethane composition according to claim 1, **characterized in that** the polyol component contains 0 to 10 wt.% diols having an equivalent weight of 30 to 500 g/val, 50 to 90 wt.% polyols having an equivalent weight of 30 to 400 g/val, 5 to 40 wt.% oleochemical polyols and 0 to 2 wt.% catalysts.

3. The two-component polyurethane composition according to claim 1 or 2, **characterized in that** the retarder is selected from organic carboxylic acids, inorganic acids, acid chlorides, acid salts or acid isocyanates.

4. The two-component polyurethane composition according to one of claims 1 to 3, **characterized in that** less than 2 wt.% pigments and fillers are contained therein.

5. The two-component polyurethane composition according to one of claims 1 to 4, **characterized in that** the aromatic isocyanates are selected from 2,4-MDI and/or 4,4-MDI, in particular mixtures, and the aliphatic isocyanates are selected from the oligomers of the HDI.

6. The two-component polyurethane composition according to one of claims 1 to 4, **characterized in that** the composition is free of plasticizers, solvents and/or pigments.

7. The two-component polyurethane composition according to one of claims 1 to 5, **characterized in that** the two-component polyurethane composition has a viscosity of less than 50000 mPas 60 minutes after being mixed.

8. The two-component polyurethane composition according to one of claims 1 to 7, **characterized in that** the cross-linked composition has a glass transition temperature of 50 to 130°C.

9. A method for producing composite parts from synthetic fibers and two-component polyurethane compositions, **characterized in that** the components of the composition according to one of claims 1 to 8 are mixed and then immediately introduced under vacuum and/or pressure into a mold containing fibers.

10. The method according to claim 9, **characterized in that** the mixture of components is freed of enclosed gases before being introduced into the mold.

11. The method according to claim 9 or 10, **characterized in that** the composition is introduced at 15 to 35°C and the reaction is accelerated by increased temperature after the mold has been filled completely.

12. The method according to one of claims 9 to 11, **characterized in that** the fiber material is selected from natural fibers, glass fibers, carbon fibers, synthetic fibers, ceramic fibers, boron fibers, metal fibers or other high-strength fiber materials.

13. The method according to claim 12, **characterized in that** the fiber materials are used in the form of mats, woven fabrics, knitted fabrics, rovings and non-woven fabrics, if necessary after pretreatment of the fibers.

14. A fiber composite material consisting of fiber material and a two-component polyurethane composition according to one of claims 1 to 8.

15. The fiber composite material according to claim 14, wherein the fiber materials are contained directionally and are embedded in a matrix of the two-component polyurethane composition.

## Revendications

1. Composition de réticulation au polyuréthane à deux composants constituée de
- un composant A contenant des polyols, des additifs,
- un composant B contenant 100 à 65% en poids de polyisocyanates aromatiques, 0 à 35% en poids de polyisocyanates aliphatiques et 0,1 à 3,0 en poids de retardateur, et éventuellement des additifs,
la composition de mélange ayant une viscosité (EN ISO 2555) de 100 mPas à 3000 mPas à 25°C, la viscosité étant déterminée immédiatement après le mélange et la composition réticulée ayant une température de transition vitreuse (Tg) supérieure à 50°C (mesurée avec DSC, DIN 11357) et une durée de vie en pot d'environ 60 minutes, la durée de vie en pot étant le temps au bout duquel la viscosité d'un mélange à 25°C est augmentée à plus de 50000 mPas.

2. Composition au polyuréthane à deux composants selon la revendication 1, **caractérisée en ce que** le composant polyol contient de 0 à 10% en poids de diols ayant un poids équivalent de 30 à 500 g/éq, de 50 à 90% en poids de polyols ayant un poids équivalent de 30 à 400 g/éq., de 5 à 40% en poids de polyols oléochimiques et 0 à 2% en poids de catalyseurs.

3. Composition au polyuréthane à deux composants selon la revendication 1 ou 2, **caractérisée en ce que** le retardateur est choisi parmi les acides carboxyliques organiques, les acides minéraux, les chlorures d'acides, les sels acides ou les isocyanates acides.

4. Composition au polyuréthane à deux composants selon la revendication 1 à 3, **caractérisée en ce qu'**elle contient moins de 2% en poids de pigments et de charges.

5. Composition au polyuréthane à deux composants selon la revendication 1 à 4, **caractérisée en ce que** les isocyanates aromatiques sont choisis parmi le 2,4-MDI et/ou le 4,4-MDI, en particulier des mélanges, et les isocyanates aliphatiques sont choisis parmi les oligomères du HDI.

6. Composition au polyuréthane à deux composants selon l'une des revendications 1 à 4, **caractérisée en ce que** la composition est exempte de plastifiants, de solvants et/ou de pigments.

7. Composition au polyuréthane à deux composants selon l'une des revendications 1 à 5, **caractérisée en ce que**, 60 min. après le mélange, la composition au polyuréthane à deux composants a une viscosité inférieure à 50000 mPas.

8. Composition au polyuréthane à deux composants selon la revendication 1 à 7, **caractérisée en ce que** la composition réticulée a une température de transition vitreuse de 50 à 130°C.

9. Procédé de fabrication d'éléments composites constitués de fibres synthétiques et de compositions au polyuréthane à deux composants, **caractérisé en ce que** les composants de la composition selon les revendications 1 à 8, sont mélangés et, immédiatement après, introduits sous vide et/ou sous pression dans un moule contenant des fibres.

10. Procédé selon la revendication 9, **caractérisé en ce que**, avant l'introduction dans le moule, des gaz piégés sont dégagés du mélange des composants.

11. Procédé selon la revendication 9 ou 10, **caractérisé en ce que** la composition est introduite à une température de 15 à 35°C et la réaction après remplissage complet du moule est accélérée par une température majorée.

12. Procédé selon l'une des revendications 9 à 11, **caractérisé en ce que** la matière fibreuse est choisie parmi les fibres naturelles, les fibres de verre, les fibres de carbone, les fibres synthétiques, les fibres céramiques, les fibres de bore, les fibres métalliques ou d'autres matières fibreuses à haute résistance.

13. Procédé selon la revendication 12, **caractérisé en ce que** les matières fibreuse sont utilisées comme tapis, tissus tissés, tissus maillés, tissus stratifil, canevas, éventuellement après un prétraitement des fibres.

14. Matériau composite fibreux constitué de matières fibreuses et d'une composition au polyuréthane à deux composants selon l'une des revendications 1 à 8.

15. Matériau composite fibreux selon la revendication 14, dans lequel les matières fibreuses sont contenues de manière orientées et sont noyées dans une matrice de la composition au polyuréthane à deux composants.
